# EUROPEAN PATENT APPLICATION

(11) **EP 1 529 905 A1**
(43) Date of publication of application: **11.05.2005**
(21) Application number: 03104134.6
(22) Date of filing: 10.11.2003
(51) Int. Cl.: E05B 65/12, E05B 45/00, B60J 7/185

(54) **Locking device and open roof construction provided therewith**

(71) Applicant: Inalfa Roof Systems Group B.V., 5804 AH Venray (NL)
(72) Inventor: Nellen, Marcel Johan Christiaan, 5803 HL, Venray (NL)
(74) Representative: Voncken, Bartholomeus Maria Christiaan

(57) **Abstract**

A locking device for releasably locking together a first object and a second object is shown, comprising a locking pin on said first object; a first locking member provided on said second object for cooperation with said locking pin, which first locking member is rotatable between a free position in which a locking recess thereof can receive or release the locking pin, and a locking position in which said locking recess lockingly houses the locking pin; a second locking member provided on said second object for cooperation with said first locking member, which second locking member is rotatable between a non-operative position in which the first locking member can rotate, and an operative position in which the first locking member is locked in its locking position; a control means provided on said second object for at least partially controlling the position of the second locking member, which control means is movable to and fro relative to said second object.

## Description

The invention firstly relates to a locking device for releasably locking together a first object and a second object.

The state of the art shows a great diversity of locking devices for releasably locking together a first object and a second object. An example of such a locking device can be found in an open roof construction for a vehicle, in which said first object is a stationary roof section and said second object is a movable closure means for opening and closing a roof opening provided in said stationary roof section.

In general one can state, that the more reliable such a locking device has to be, the more complicated it is.

It is an object of the present invention to provide a locking device which has a reduced number of parts compared to known locking devices, but which notwithstanding its reduced complexity provides a very reliable operation.

Thus, in accordance with the present invention, there is provided a locking device for releasably locking together a first object and a second object, comprising
- a locking pin on said first object;
- a first locking member provided on said second object for cooperation with said locking pin, which first locking member is rotatable between a free position in which a locking recess thereof can receive or release the locking pin, and a locking position in which said locking recess lockingly houses the locking pin;
- a second locking member provided on said second object for cooperation with said first locking member, which second locking member is rotatable between a non-operative position in which the first locking member can rotate, and an operative position in which the first locking member is locked in its locking position;
- a control means provided on said second object for at least partially controlling the position of the second locking member, which control means is movable to and fro relative to said second object.

Preferred embodiments of the locking device in accordance with the present invention are defined in the sub claims.

The invention secondly relates to an open roof construction for a vehicle, provided with a locking device according to the present invention.

Hereinafter the invention will be elucidated referring to the drawings, in which an embodiment of the locking device according to the present invention is illustrated.

In the drawing:
figure 1 shows schematically and in a side elevational view part of an open roof construction for a vehicle provided with an embodiment of the locking device according to the present invention in an open position;
figures 2 - 5 show successive stages during closing said open roof construction;
figure 6 shows said open roof construction in a fully closed position, and
figures 7-10 show successive stages during opening said open roof construction.

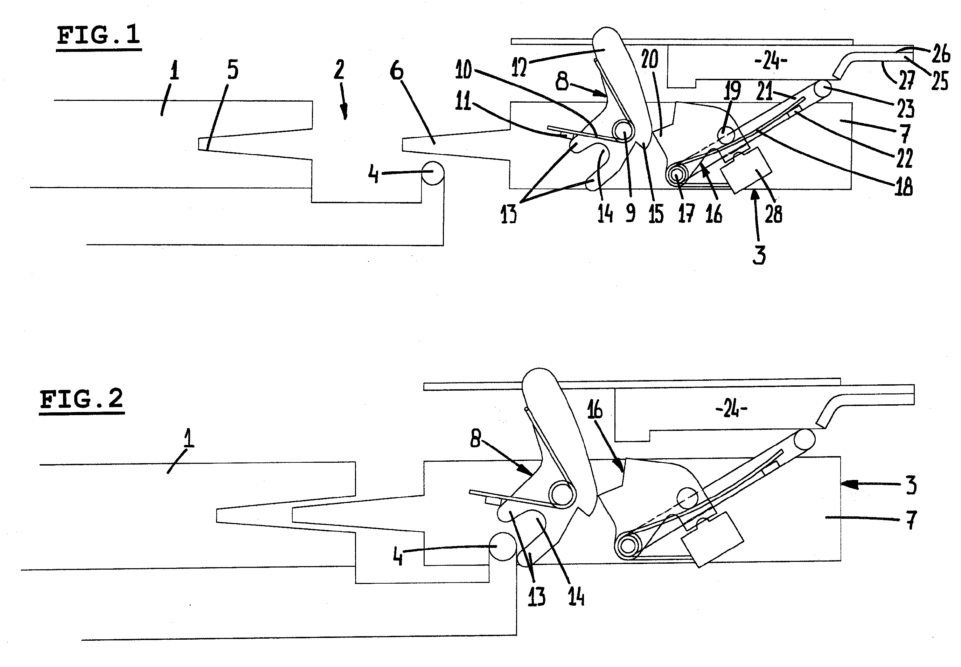

Firstly referring to figure 1 an open roof construction for a vehicle is partly illustrated schematically in a side elevational view. Said open roof construction comprises a stationary roof section 1 in which a roof opening 2 is defined which can be closed and opened by a movable closure means 3. Hereinafter the stationary roof section 1 and closure means 3 will be indicated as first object and second object, respectively.

On the first object 1 a locking pin 4 is provided which, in the illustrated embodiment, extends perpendicularly to the plane of the drawing. Further, the first object 1 comprises a recess 5 for receiving a corresponding projection 6 of the second object 3. The recess 5 and projection 6 will cooperate during closing the open roof construction for correctly aligning the first object 1 and second object 3.

The second object 3 comprises a carrier 7 on which, firstly, a first locking member 8 is provided. This first locking member 8 can rotate around a first axis of rotation 9 carried by the carrier 7. A torsion spring 10 is positioned between an abutment 11 provided on the carrier 7 and an operating arm 12 of the first locking member 8. This torsion spring 10 preloads the first locking member 8 clockwise. The rotational end position of the first locking member 8 under influence of the torsion spring 10 is defined by the abutment 11 which, in the illustrated embodiment, engages an arm of a two-armed locking fork 13 of the first locking member 8.

Between its two arms the two-armed locking fork 13 defines a locking recess 14 which (as will appear later) is meant for receiving the locking pin 4 of the first object 1.

Further, the first locking member 8 is provided with a locking nose 15, the function of which also will appear later.

The second object 3 further is provided with a second locking member 16 which can rotate around a second axis of rotation 17. A second torsion spring 18 is preloaded between the carrier 7 and an abutment 19 provided on the second locking member 16. This second torsion spring 18 preloads the second locking member anti-clockwise.

The second locking member 16 is provided with an additional locking nose 20 which, in a manner to be described later, will cooperate with the locking nose 15 of the first locking member 8. A control arm 21 is rotatably mounted on the second axis of rotation 17. By means not shown in detail this control arm 21 is limited in its relative rotation with respect to the second locking member 16. The control arm 21 carries an abutment 22 which cooperates with the second torsion spring 18 in such a way that, relative to the second locking member 16, the control arm 21 is preloaded clockwise.

On its free end the control arm 21 is provided with a follower means 23 (such as, for example, a follower roll) the function of which will appear later.

The second object 3 further comprises a control means 24 which is movable to and fro relative to the remainder of the second object 3 in a manner not shown in detail (for example by means of an electric motor). This control means 24 is provided with curve means 25 which, as will be explained hereinafter, comprises an upper curve track 26 and lower curve track 27 for cooperation with the follower means 23 of the control arm 21.

Finally, the carrier 7 of the second object 3 is provided with a switch 28 which can cooperate with the second locking member 16, as will appear later.

In figure 1 the locking device (which basically comprises the locking pin 4, first and second locking members 8 and 16, respectively, control arm 21 and control means 24 with belonging parts) is in a release position. This release position occurs when the open roof construction is in a position in which its closure means (second object 3) does not close the roof opening 2. In this position of the second object 3 the first locking member 8, under influence of the torsion spring 10, assumes a rotational position (so-called free position) in which it (in the present case by means of its locking fork 13) engages the abutment 11. The circumference of the first locking member 8 above the locking nose 15 engages the additional locking nose 20 of the second locking member 16, thus keeping the second locking member 16 in the illustrated rotational position notwithstanding the preload of the second torsion spring 18. Further the control means 24 is in an extreme position (so-called rearward position) in which its curve means 25 are positioned right from the follower means 23 of the control arm 21.

Further, in figure 1 the control arm 21 assumes its extreme clockwise position relative to the second locking member 16 under influence of the second torsion spring 18.

Figure 2 shows a position, in which the entire second object 3 has started moving to the left. The locking recess 14 is about to receive the locking pin 4 of the first object 1. The relative positions of all parts belonging to the second object 3 have not yet changed. The projection 6 has sterted to enter the recess 5.

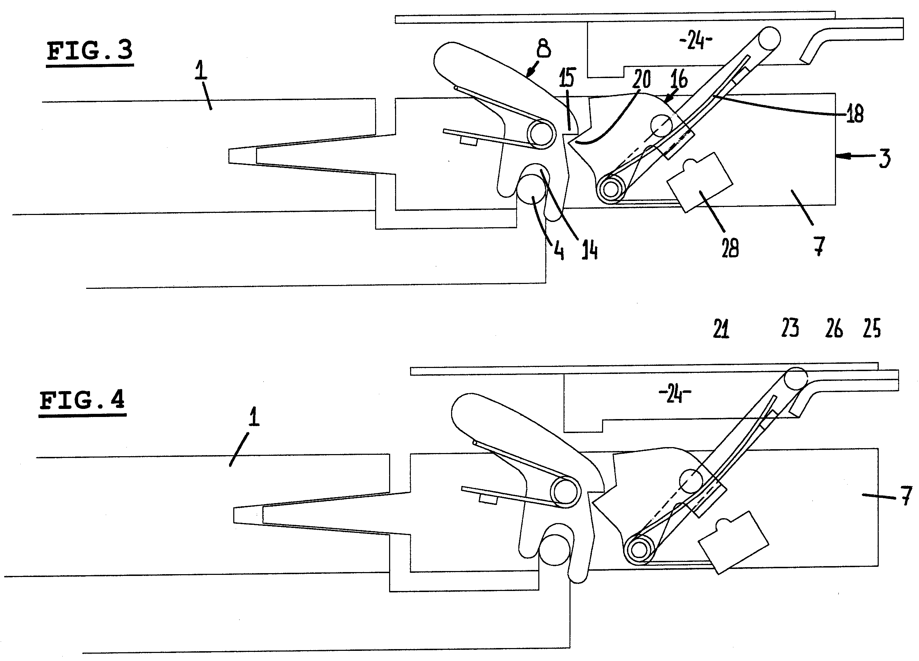

Figure 3 shows the situation, in which, due to the cooperation between the locking pin 4 and locking recess 14 the first locking member 8 is rotated anti-clockwise towards a position, in which its locking nose 15 has been moved beyond the additional locking nose 20 of the second locking member 16. As a result, the second locking member 16 will rotate anti-clockwise under influence of the second torsion spring 18. Such a rotation of the second locking member 16 will result in a activation of the switch 28 which, then, activates a driving member (not shown) of the control means 24 which then will start to move (to the left) towards its opposite extreme position (so-called forward position). The projection 6 has further entered the recess 5.

It is noted, that the movement of the second object 3 from its position illustrated in figure 1 towards the first objects may be caused manually or mechanically.

In figure 4 the control means 24 has moved further towards its forward position (to the left) that far that the follower means 23 of the control arm 21 has come into engagement with the upper curve track 26 of the curve means 25. It should be noted, however, that the control means 24 has not yet reached its extreme forward position. Compared to the situation illustrated in figure 3, the carrier 7 has not substantially changed its position relative to the first object 1.

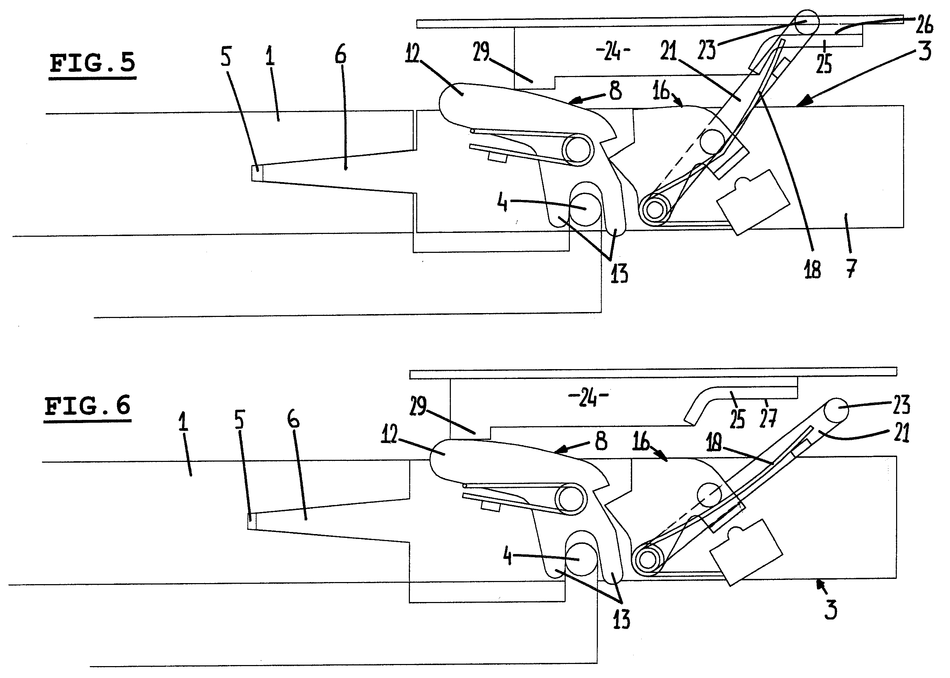

During a continued movement of the control means 24 to the left (towards its extreme forward position) a projection or control part 29 of the control means 24 will engage the operating arm 12 of the first locking member 8 (figure 5). As a result the first locking member 8 will experience a final anti-clockwise rotation, such that due to the cooperation between the locking fork 13 and the locking pin 4 the carrier 7 (and thus the entire second object 3) is moved closer towards the first object 1. Now, the projection 6 still further enters the recess 5. The follower means 23 of the control arm 21 moves along the upper curve track 26 of the curve means 25. As a result, the control arm 21 will rotate anti-clockwise relative to the second locking member 16 while further preloading the torsion spring 18.

Figure 6 shows the fully locked position of the locking device (or fully closed position of the open roof construction). The control means 24 has reached its extreme forward position (the movement of the control means 24 is controlled in a manner not shown in detail; for example an end switch may be applied). The control part 29 of the control means 24 has rotated the first locking member 8 (by engaging its operating arm 12) towards its extreme rotated position (locking position), in which the projection 6 of the second object 3 is completely received in the recess 5 of the first object 1.

The locking pin 4 is received between the arms of the two-armed locking fork 13. A rotation of the first locking member 8 is prevented by the cooperation of the control part 29 of the control means 24 with the operating arm 12 of the first locking member 8.

In the situation illustrated in figure 6, the follower means 23 of the control arm 21 has moved out of engagement with the curve means 25 and under influence of the second torsion spring 18. The control arm 21 has rotated in a clockwise fashion relative to the second locking member 16. This means, that the follower means 23 now is in a position in which it can engage the lower curve track 27 of the curve means 25 when, during opening, the control means 24 will move back (here, to the right) towards its rearward position (as will be described hereinafter).

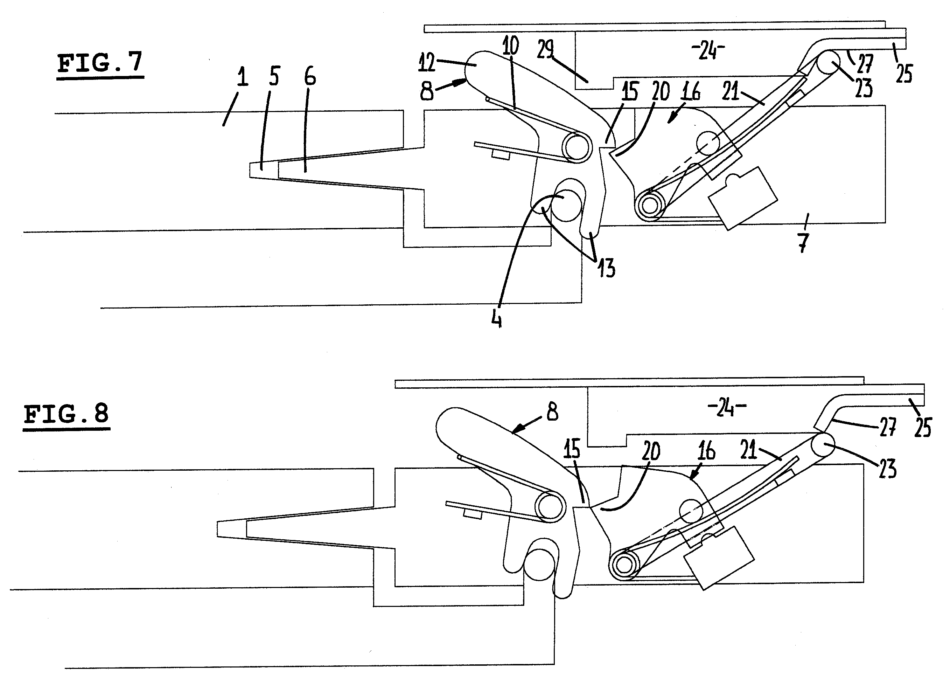

In figure 7 the first stage of opening the locking device (or open roof construction) has been illustrated. The control means 24 is moving towards its rearward position (such a movement of the control means 24 may be initiated by appropriate means, such as for example a switch which has to be pressed for activating drive means, eg an electric motor, of the control means 24). The control part 29 of the control means 24 has disengaged the operating arm 12 of the first locking member 8 and, under influence of the first torsion spring 10, the first locking member 8 has rotated clockwise until its locking nose 15 has come into engagement with the additional locking nose 20 of the second locking member 16. A further rotation of the first locking member 8 will be prevented by the cooperation between the locking nose 15 and additional locking nose 20.

As a result of this clockwise rotation of the first locking member 8 (and resulting cooperation between the locking fork 13 and locking pin 4) the carrier 7 already has moved away partly from the first object 1. Thus, the projection 6 has partly moved out of the recess 5.

In figure 7 the follower means 23 of the control arm 21 has reached a position, in which a horizontal section of the lower curve track 27 of the curve means 25 merges into an inclined downwardly extending section.

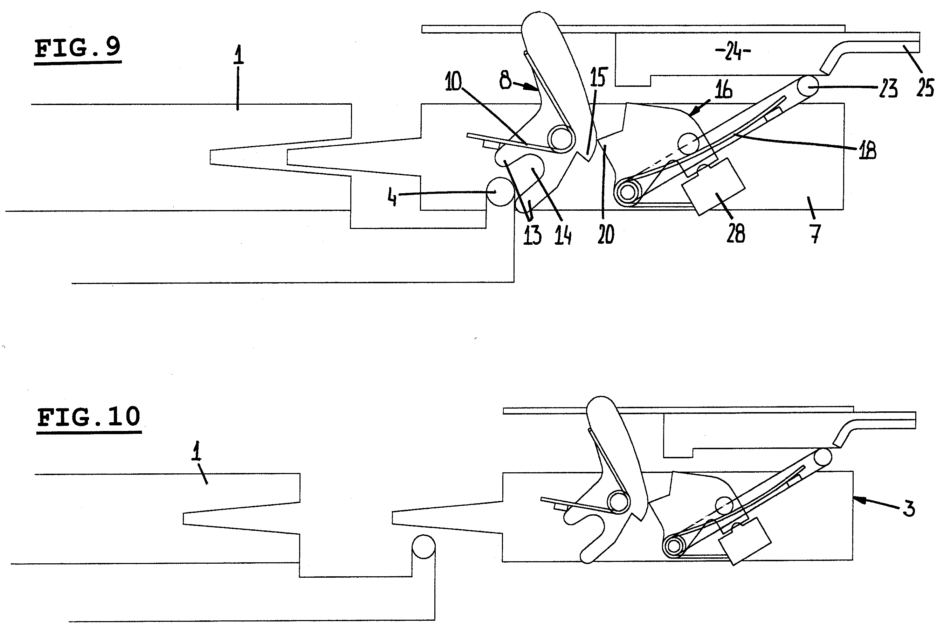

During a further movement of the control means 24 to the right (figure 8) the follower means 23 is pushed downwardly by the lower curve track 27 of the curve means 25. This causes the control arm 21, and thus the second locking member 16, to rotate in a clockwise fashion until the additional locking nose 20 of the second locking member 16 disengages the locking nose 15 of the first locking member 8. As a result (figure 9) the torsion spring 10 further rotates the first locking member 8 such that the locking pin 4 is released from the locking recess 14 of the two-armed locking fork 13. Meanwhile, the control means 24 has reached its extreme rearward position, while the carrier 7 further moves away (manually or mechanically) from the first object 1. The follower means 23 disengages the curve means 25, but an anti-clockwise rotation of the second locking member 16 under influence of its second torsion spring 18 is prevented because the additional locking nose 20 rides upon the circumference of the first locking member 8 beyond the locking nose 15.

About at reaching the situation in figure 8 the switch 28 is activated again by the second locking member 16, such that the movement of the control means 24 will stop.

When the components of the locking device have assumed their position illustrated in figure 9, the second object 3 (closure means of the open roof construction) may move further away from the first object 1 (stationary roof section) as illustrated in figure 10. Basically, figure 10 corresponds with the starting position illustrated in figure 1.

The invention is not limited to the embodiment described before which may be varied widely within the scope of the invention as defined by the appending claims.

## Claims

1. Locking device for releasably locking together a first object and a second object, comprising
- a locking pin on said first object;
- a first locking member provided on said second object for cooperation with said locking pin, which first locking member is rotatable between a free position in which a locking recess thereof can receive or release the locking pin, and a locking position in which said locking recess lockingly houses the locking pin;
- a second locking member provided on said second object for cooperation with said first locking member, which second locking member is rotatable between a non-operative position in which the first locking member can rotate, and an operative position in which the first locking member is locked in its locking position;
- a control means provided on said second object for at least partially controlling the position of the second locking member, which control means is movable to and fro relative to said second object.

2. Locking device according to claim 1, wherein the control means is provided with curve means for cooperation with corresponding means on said second locking member.

3. Locking device according to claim 2, wherein the second locking member is provided with a control arm projecting therefrom which at its free end is provided with a follower means for cooperation with the curve means of the control means.

4. Locking device according to claim 3, wherein the control arm is movable relative to the second locking member in a limited sense and wherein the relative position is pre-loaded.

5. Locking device according to claim 4, wherein the second locking member and its control arm are rotatable around the same pivot axis on the second object and wherein a spring member is positioned between the second locking member and the control arm.

6. Locking device according to any of the previous claims, wherein the first locking member is pre-loaded towards its free position, whereas the second locking member is pre-loaded towards its operative position.

7. Locking device according to claim 6, wherein for pre-loading the first and second locking members torsion springs are provided.

8. Locking device according to any of the previous claims, wherein the movement of the control means is controlled by a switch which is operated by the second locking member.

9. Locking device according to claim 8, wherein the switch is positioned such that it is actuated when the second locking member assumes its non-operative position.

10. Locking device according to any of the previous claims, wherein the first locking member and second locking member are provided with a locking nose and additional locking nose, respectively, for cooperation with each other in their locking position and operative position, respectively.

11. Locking device according to claim 10, wherein the locking nose and additional locking nose are shaped such that the first locking member in its free position maintains the second locking member in its non-operative position.

12. Locking device according to any of the previous claims, wherein the control means is provided with a control part for engaging the first locking member for moving the latter towards its locking position.

13. Locking device according to claim 12, wherein the first locking member comprises an operating arm for cooperation with the control part of the control means.

14. Locking device according to any of the previous claims, wherein the first object is a stationary roof section of an open roof construction of a vehicle, whereas the second object is a movable closure means of said open roof construction.

15. Open roof construction for a vehicle, provided with a locking device according to claim 14.
